# EUROPEAN PATENT SPECIFICATION

(11) **EP 0 961 512 B1**
(45) Date of publication and mention of the grant of the patent: **11.02.2009**
(21) Application number: 98201807.9
(22) Date of filing: 29.05.1998
(51) Int. Cl.: H04W 4/00, H04W 4/26

(54) **A method for performing handover in a radio communication environment.**
Verfahren zum weiterreichen in einer Funkkommunikationsumgebung
Procédé de transfert dans un environnement de radio-communication

(43) Date of publication of application: 01.12.1999
(73) Proprietor: TELEFONAKTIEBOLAGET LM ERICSSON (publ), 164 83 Stockholm (SE)
(72) Inventor: Van der Pol, Edwin, 7511 LP Enschede (NL)
(74) Representative: Dohmen, Johannes Maria Gerardus

(56) References cited:
- EP-A- 0 682 456
- GB-A- 2 287 858
- GRIMLUND O ET AL: "HANDOFF STRATEGIES IN MICROCELLULAR SYSTEMS" GATEWAY TO THE FUTURE - TECHNOLOGY IN MOTION, ST. LOUIS, MAY 19 - 22, 1991, no. CONF. 41, 19 May 1991, pages 505-510, XP000260230 INSTITUTE OF ELECTRICAL AND ELECTRONICS ENGINEERS

## Description

### Field of the invention

The present invention relates generally to wireless telecommunication systems and, more specifically, to radio telecommunication systems for duplex radio communication between two or more units, at least one of which can be mobile.

### Background of the Invention

Wireless telecommunication systems, such as the well-known cellular and cordless telephone and data transmission systems, typically comprise a plurality of mobile or portable radio communication units and a plurality of radio access units. Each access unit provides a number of radio communication channels to a geographical area or cell defined by the operating ranges of the access unit. The access units are connected to a central interface unit, also called radio exchange (RE) or mobile telephone switching office (MTSO). The RE or MTSO are in turn coupled to a Public Switch Telephone Network (PSTN) or Integrated Services Digital Network (ISDN), in some cases via an intermediate Private (Automatic) Branch Exchange (P(A)BX), for completing telephone and data calls between mobile radio and landline subscribers.

Cordless radio communication systems, ranging from simple residential cordless telephones to business cordless communication systems capable of serving hundreds or even thousands of cordless radio communication units across (large) offices, production halls etc., have been developed for use in picocell (a few meters), nanocell (up to 10m) and microcell (10 to 400 m) applications. Analogue cordless telephones are designated CTO, CT1 and CT1+. Amongst the digital cordless systems, designated CT2, CT2-CAI, CT3 and DECT (Digital Enhanced Cordless Telecommunications), both CT3 and DECT use TDMA (Time Division Multiple Access) as their transmission technique, whereas CT2 operates under FDMA (Frequency Division Multiple Access). Reference is made to a paper by C. Buckingham et al., " A Business Cordless PABX Telephone System on 800 MHz Based on the DECT Technology", IEEE Communications Magazine, 29(1991) January, p. 105-110.

Different form landline connections, a call from a radio communication unit in a wireless radio communication system often has to change its radio communication link due to degrading link quality. This, for example, because another communication unit having a call in progress on the same radio link moves into the coverage area of a particular communication unit, or if the radio communication unit itself moves out of the coverage area of the radio access unit to which it currently connects. The action of switching a call in progress from one or more physical radio links or channels to other physical radio links or channels is called handover. Such a handover can be solely completed within the radio access unit to which a radio communication unit is currently connected, a so-called "intra-cell handover". If a call is continued via a radio access unit serving another cell of a particular radio communication system, this type of handover is called "inter-cell handover". A call handover to another radio communication system is called "inter-system handover" or "external handover".

In a radio communication system operating in accordance with the DECT standard, for example, handover can be initiated by evaluating the received radio links with regard to the transmission quality of the radio links, using either one or a combination of the following criteria: RF signal level (RSSI), burst synchronisation (SYNC) error, system information field test word (A CRC) error, data field test word (X CRC) error. Besides transmission criteria, other parameters such as system identification, access rights etc. may be included in the decision of initiating handover.

DECT is a Multi Carrier/Time Division Multiple Access/Time Division Duplex (MC/TDMA/TDD) digital radio access technique, providing ten radio carriers, each dived into 24 time-slots which serve 12 duplex communication channels, called a frame. Frames are transmitted following a frame cycle time T_{F} of 10 ms.

The selection of a radio channel is based on the so-called Dynamic Channel Allocation (DCA) technique, in which a free radio link or communication channel among a plurality of radio links or communication channels common to all radio access units of the system is selected. Free radio links or free radio communication channels are established by periodically measuring or scanning the radio channels available to the system. A free radio link or a free radio communication channel is selected based on either one or a combination of the above radio link criteria.

In a practical implementation of a method performing handover in a DECT radio communication system manufactured by applicant, after a handover is initiated, during four consecutive frames verrification measurements are performed with regard to the radio link criteria between the remote radio communication unit and the radio access unit to which a call in progress has to be handed over.

Those skilled in the art will appreciate that performing such a verification measurement is not attractive from a power consumption point of view. In a practical radio environment, such as a Business Cordless Telecommunications (BCT) environment wherein a plurality of radio access units are installed in a limited area, such as an office, production hall etc. inter-cell handovers a frequently performed if a person carrying a cordless radio communication unit is walking through the office or production hall. As a result, with the known method of handover, a considerable amount of scarce battery power is consumed.

The British patent application GB 2 287 858 discloses a method for determining whether a handoff is required for a remote mobile station in a communications system having both macro- and micro-cells. The method includes the steps of measuring a received signal parameter in the serving cell and from a plurality of neighbouring cells, comparing the values measured for each of the neighbouring cells, with a variable or a predetermined threshold value, and measuring either the time for which the threshold value is exceeded or the number of times the threshold value is exceeded in a given period for use as a criterion for initiating handover of a call in progress.

The European patent application EP 0 682 456 discloses a method, in a radio communications system, of measuring signal quality from a remote unit having a voice operated transmitter to execute a handoff of the remote unit. The signal quality of a signal received from the remote unit is measured to determine whether a handoff is to be conducted based upon the signal quality of the signal received from the remote unit.

An embodiment of this method comprises the steps of measuring, at predetermined intervals of time, the integrated signal strength of a signal received from the portable remote unit having a voice operated transmitter at a serving fixed station; transmitting an audit request to the portable remote unit from the fixed station after at least one of the measurements indicate that a supervisory audio tone (SAT) is not being received from the portable remote unit at the fixed station; transmitting a response signal, at the portable remote unit, for at least six seconds in response to the audit request.

The method as disclosed comprises further steps of making measurement of integrated signal strength of the response signal from the portable remote unit at the serving fixed station if a SAT is detected after a delay of at least one second from the audit request transmission; storing the reading of the first measurement of integrated signal strength; making a consecutive second measurement of integrated signal strength of the response signal from the portable remote unit at least one second after the first measurement, if a SAT is detected during the first measurement; comparing reading of the second measurement to the stored reading of the first measurement, and determining whether handoff of the remote unit to a surrounding fixed station is to be conducted based on the readings .. of the first and the second measurements of integrated signal strength. If the comparison of the readings of the consecutive first and second measurements indicates that these readings are sufficiently alike. A decision is made for a handoff to be conducted, If the comparison of these readings do not agree within a predetermined

When the comparison of the readings of the consecutive first and second measurements indicates that the remote unit requires handoff to another sector or cell of the communications system, the remote unit having a voice operated transmitter will again be asked by transmitting an audit request to key up for transmitting a response signal allowing at least one surrounding fixed station to make a measurement to determine if they can accept the remote unit adequately, before handing the remote unit to the at least one surrounding fixed station.

### Summary of the Invention

In view of the foregoing, it is therefore an object of the present invention to provide improved handover of a call in a multi-cell radio communication system, contributing to the conservation of scarce battery power.

It is also an object of the present invention to provide a radio communication unit and a radio access unit arranged for operating in accordance with the improved handover.

According to the invention, there is provided a method of performing handover of a call in a duplex radio communication system comprising radio access units and at least one remote radio communication unit, the radio access units and the or each remote radio communication unit being arranged for establishing a call at a radio link between a remote radio communication unit and a radio access unit, which radio link is selected from a plurality of predetermined radio links, and for switching a call in progress at a first radio link between a remote radio communication unit and a first radio access unit to a second radio link between the remote radio communication unit and a second radio access unit subject to periodically measured radio link criteria between the remote radio communication unit and the second radio access unit exceeding in performance periodically measured radio link criteria between the remote radio communication unit and the first radio access unit, wherein handover of the call in progress is initiated if the measured radio link criteria between the radio communication unit and the second radio access unit exceed in performance the measured radio link criteria between the remote radio communication unit and the first radio access unit, characterized in that the handover having been initiated is established if the measured radio link criteria between the radio communication unit and the second radio access unit exceed in performance the measured radio link criteria between the remote radio communication unit and the first radio access unit for at least two consecutive periodic radio link criteria measurements.

In the method according to the invention, an initiated handover is established if, during a consecutive measurement of the radio link criteria, the conditions for handover of a call in progress to the second radio access unit are still available. That is, if the radio link criteria of a call between the remote radio communication unit and the second radio access unit still exceed in performance the radio link criteria between the remote radio communication unit and the first radio access unit. Accordingly, no additional verification measurements are performed, such that with the method according to the invention, the battery power for performing the verification measurements is saved for each handover.

The invention is based on the insight that, by performing the radio link criteria measurements with a rate such that during, for example, two consecutive measurements the radio link quality does not degradate below a level at which no radio communication at all is possible, a qualitative seamless handover can be performed without additional verification measurements.

In DECT, for example, radio link criteria are scanned and refreshed every 1600 ms in a slow single carrier scan and, for example, every 800 ms in a fast single carrier scan. For a multicarrier scan, that is wherein two or more radio links of a particular radio access unit are scanned, the above scan times are even further reduced with a factor determined by the scanned number of carriers or radio links. Scan times of the above length have been proven to be satisfactory for performing handover.

In an embodiment of the method according to the invention, the handover is established if the measured radio link criteria differ over a predetermined range or threshold. This, in order to force as little as possible handovers.

Suitable radio link criteria for performing handover in accordance with the present invention comprise Received Signal Strenght Indicator (RSSI) measurement, Bit Error Rate (BER) measurement and, in particular a radio communication sytem operating in accordance with the DECT standard radio link criteria such as burst synchronisation (SYNC) error, system information field test word (A CRC) error and data field test word (X CRC) error can be used for initiating handover, either alone or in combination.

Although handover can be initiated and controlled by one or both the radio access units and the remote radio communication units, in a preferred embodiment of the method according to the invention, the radio link criteria are measured and handover is initiated and performed by and under the control of a remote radio communication unit.

Advantageously, the periodically measured radio link criteria are obtained not only for making a decision as to handover but also to serve as a basis for selecting a free radio link or radio communication channel, using the DCA algorythm, for example. Those skilled in the art will appreciate that this combined use even further contributes to power saving. Preferably, all the radio communication channels available to a remote radio communication unit are scanned. However, for a fast scan, for example, measurement of radio link criteria can be limited to selected radio communication channels, such as radio communication channels carrying a so called dummy-bearer transmitted by radio access units.

The invention further relates to a radio communication unit, such as a radio telephone and a radio access unit, such as a radio base station for use in a duplex radio communication system, in particular a cordless radio communication system, comprising control means adapted to operate following the method according to the present invention.

The above-mentioned and other features and advantages of the invention are illustrated in the following description with reference to the enclosed drawings.

### Brief Description of the Drawings

Fig. 1 shows, in a schematic and illustrative manner, a cordless telecommunication system in which the present invention can be used.

Fig. 2 shows, in a schematic and illustrative manner, a digital data stream comprising data bursts.

Fig. 3 shows in detail the structure of a data burst of fig. 2.

Figs. 4a, 4b and 4c illustrate in a very schematic manner the method for call handover according to the present invention.

Fig. 5 shows a simplified block diagram of a radio communication unit taking the form of a telephone set operating according to the present invention.

Fig. 6 shows a simplified block diagram of a radio access unit taking form of a radio base station operating according to the present invention.

### Detailed Description of the Embodiments

Without the intention of a limitation, the invention will now be explained by its application in a cordless radio telephone system operating in accordance with the DECT standard.

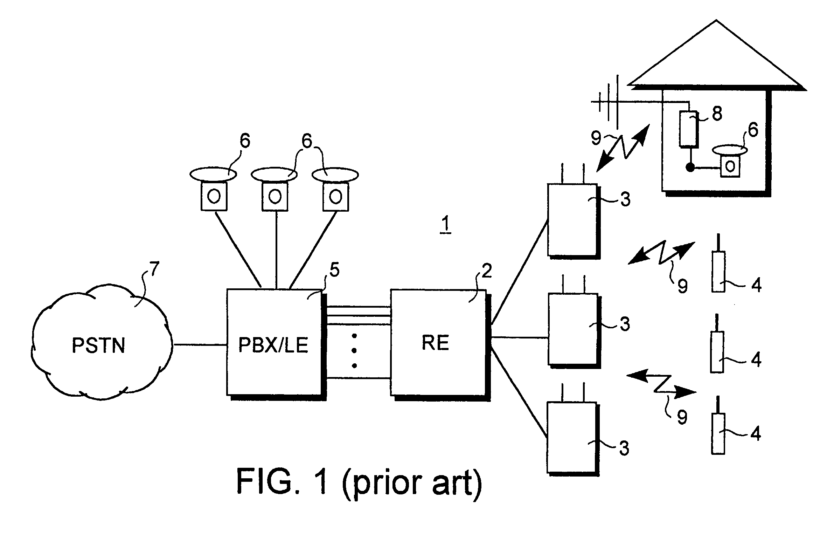

Fig. 1 illustrates a typical DECT radio communication system, generally designated with reference numeral 1. The system comprises three essential elements: a radio exchange (RE) 2, a plurality of compact radio access units or base stations 3, which are installed throughout the area to be covered and connect directly to the radio exchange 2, and remote cordless or wireless radio communication units in the form of portable telephones or handsets 4 which connect over a radio link 9 to the radio access units 3.

Each radio access unit 3 provides service to a given area, called a cell, which is surrounded and/or overlapped by other cells of other radio access units 3, i.e. a so-called multi-cell approach. The radius of indoor cells amounts typically from 10m - 100m, whereas the radius of outdoor cells typically ranges from 200m up to 5000m.

The radio exchange 2 is connected to a wired exchange 5 to which a plurality of wired telephones 6 can be connected. In business environments, this exchange 5 is generally a so-called Private Branch Exchange (PBX) whereas in outdoor applications, such as RLL or WLL, the exchange 5 is generally a Local Exchange (LE) which, like the PBX, is connected to a Public Switched Telephone Network (PSTN) 7, i.e. the ordinary wired public telephone network.

In RLL or WLL applications, the radio access units 3 may also connect over an air link 9 with so-called (Wireless) Fixed Access Units ((W)FAU) 8 which, in fixed RLL or WLL, connect to a fixed telephone terminal or socket for the connection of an ordinary wired telephone 6. In mobile RLL or WLL, providing local mobility in the home, for example, the FAU 8 is arranged to establish an air link with a handset 4 in the home (not shown).

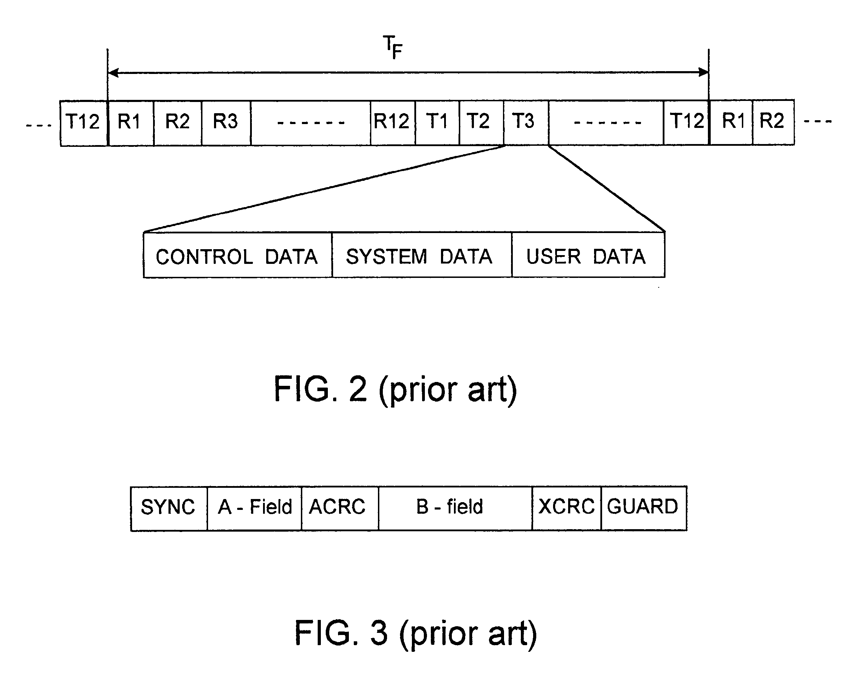

In DECT, the information over the air link 9 is transmitted using a frame structure shown in Fig. 2. During the first halve of the frame, i.e. the first twelve time-slots designated R1, R2, ... R12, data from the radio access units 3 are received by the handsets 4 or (W)FAU 8, whereas in the second halve of each frame, i.e. the second twelve time-slots designated T1, T2, ... T12, the remote communication units 4 or 8 transmit data to the radio access units 3. A radio communication link between a radio access unit 3 and a remote communication unit 4 or 8 is assigned a slot in the first halve of the frame and a slot bearing the same number in the second halve of the frame. Each time-slot typically contains control data, system data and information or user data.

A more detailed time-slot structure is shown in Fig. 3. The control data field contains a so-called synchronisation (SYNC) word, which has to be correctly identified at a radio access unit 3 or a remote communication unit 4, 8 in order to process the received data. SYNC data will typically need 16 bits, preceded by a preamble of 16 bits.

The system data field regularly contain system information on identity and access rights, services availability and, when required, information for handover to another communication channel in case of disturbances or transfer of a call to another radio access unit. Also paging and call set up procedures are carried over the system data field, which is also called A-FIELD. System data will typically need 64 bits with a 16 bit Cyclic Redundancy Check word designated ACRC.

The information or user data, also called B-FIELD, comprise in case of a telephone call digitized speech samples obtained during the frame cycle time T_{F} of 10 ms. These speech samples are coded in accordance with the above-mentioned ADPCM coding algorithm CCITT Rec. G.726 having a typical bit rate of 32 kb/s. This means that for each speech call 320 bits have to be transmitted and received during every frame. The ADPCM coded B-FIELD data contain 80 speech samples of 4 bit each. These ADPCM data are formed from the difference of successive 8 bit wide PCM coded speech samples. The ADPCM quantization process is dynamically adapted to the momentary average signal level.

The B-FIELD data is scrambled and a 4 bit Cyclic Redundancy Check word designated XCRC is formed from the information data. Including guard space, the total number of bits per time slot according to the DECT standard amounts to 480. These bits are transmitted at a system clock frequency or system bit rate of 1152 kb/s.

The selection of a radio channel is based on the so-called Dynamic Channel Allocation (DCA) technique, in which a free radio link or communication channel amongst a plurality of radio links or communication channels common to all radio access units 3 or cells of the system is selected. DCA requires no channel or frequency planning and the like, and optimizes the occupation of the available communication capacity of the system.

One of the basic features of the system is decentralized Continuous Dynamic Channel Selection (CDCS), a technique in which the handsets 4 or (W)FAU 8 selects the best available radio communication channel. With CDCS, channel selection is not limited to call set-up, but continues during the communication. CDCS optimizes the radio link quality between a radio communication unit such as a handset 4 and a radio access unit 3 and the occupation of the available radio communication channels per cell. Reference is made to a paper by D. Åkerberg, "Novel Radio Access Principles Useful for the Third Generation Mobile Radio Systems", The Third IEEE International Symposium on Personal, Indoor and Mobile Radio Communication, Boston Massachusetts, October 19-21, 1992.

DECT radio communication networks may comprise several DECT radio communication systems 1, which can be independently operated by one or more operators, for example. Further, several DECT radio communication systems 1 may be operated independently in the same geographical area.

In the case of synchronously operated systems, provisions are made to secure that the frames and time slots of the several units involved are exchanged following a common system timing. This implies that the timing references of the several radio access units and radio communication units have to be adjusted with a predetermined accuracy to the common system timing.

In the case of asynchronously operated systems, the transmit and receive data in frames and time slots of the radio access units of a network or clusters of radio access units belonging to several systems are not adjusted to a common system or network timing. Note that the radio access units in a particular cluster may operate synchronously.

During a scan of the radio environment for radio link criteria, preferably all information with regard to the transmission quality of the several detected radio links should be retrieved and listed, such as RF signal level (RSSI), burst synchronisation (SYNC) error, system information field test word (A CRC) error, data field test word (X CRC) error. By using a weighing scheme the need for a handover to a particular access unit or system can be initiated.

The decision to handover may take into account other information than link quality as well, such as access rights, preferences of inter-cell or inter-system handover or roaming to other radio systems.

Further, the scanning may be adaptively adjusted to cope with the particular radio environment of a radio communication unit and communication characteristics. In the case of call pending, the scanning rate preferably has to be faster than in the waiting or idle mode of a communication unit, i.e. no call pending, for example. For making a list on the radio links available for handover, a full scan of all the available radio links is not always necessary. The scan can be stopped or limited if, for instance, a sufficient number of adequately radio links has been found.

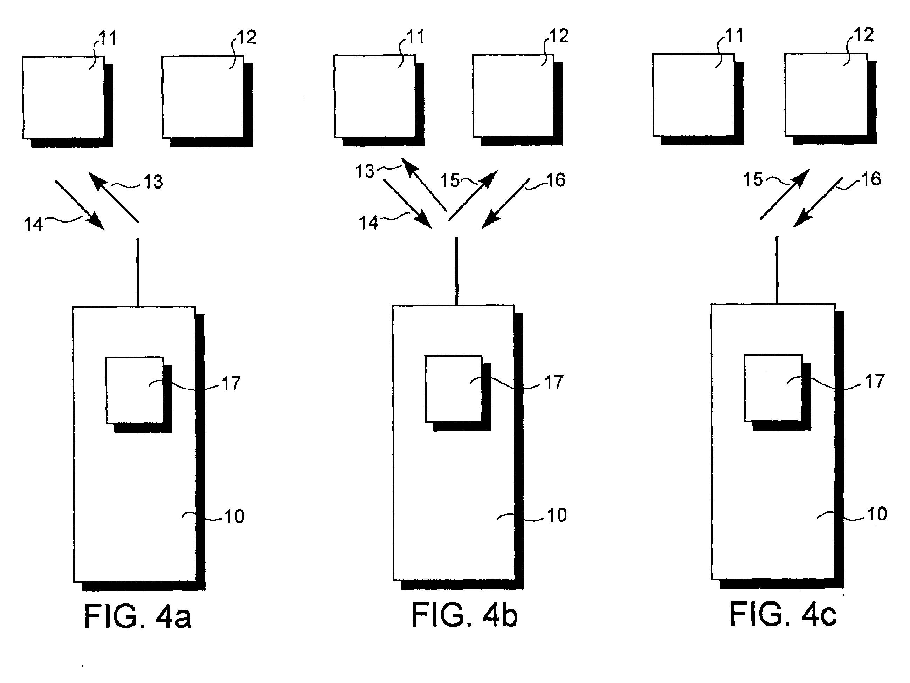

The method according to the present invention for handover of a call in progress from a first radio link to a second radio link is generally illustrated in Figs. 4a, 4b and 4c.

Fig. 4a shows in a very schematic manner a radio communication system comprising a remote radio communication unit 10, such as a telephone handset 4 or a (W)FAU 8 shown in Fig. 1, and two radio access units 11 and 12. Arrows 13 and 14 represent a first duplex radio link carrying a call in progress between the radio communication unit 10 and the first radio access unit 11. The radio communication unit 10 is also in the range of the second radio access unit 12. It is assumed that the radio access units 11 and 12 operate time synchronous.

Further, it is assumed that the radio communication unit 10 has to perform an inter-cell handover of the call from the first radio access unit 11 to the second radio access unit 12. This because the user of the radio communication unit 10 is moving in the direction of the second radio access unit 12 or that the radio path between the radio communication unit 10 and first radio access unit 11 is suddenly blocked, for example.

Reference numeral 17 denotes scan means for scanning the radio environment for one or a plurality of the above-mentioned radio link criteria. The scan means 17 may include storage means for storing the measured radio link criteria. In a preferred embodiment, also a list of available radio links for handover is maintained.

If the radio link criteria obtained by the radio communication unit 10 from the second radio access unit 12 exceed in performance the radio link criteria obtained from the first radio acces unit 11, over a predetermined range or threshold, a handover is initiated by the radio communication unit 10.

In accordance with the invention, the handover is not completed after a second or even further periodic measurement of the radio link criteria and if the radio link criteria obtained in such further measurement still exceed in performance over the predetermined range or threshold. That is, in the present example, if the radio link criteria obtained for radio links between the radio communication unit 10 and the second radio access unit 12 exceed the radio link criteria obtained of radio links between the radio communication unit 10 and the first radio access unit 11, by the predetermined range or threshold.

In the affirmative, as illustrated in Fig. 4b, a duplex radio link 15, 16 is established between the radio communication unit 10 and the second radio acces unit 12. The duplex radio link 15, 16 is selected from a free or available radio link or radio communication channel determined during the periodic scan of the radio environment by the scan means 17. Note that the first radio link 13, 14 with the first radio access unit 11 is still available.

Fig. 4c shows the state wherein the call in progress is taken over by the second radio acces unit 12 via the second duplex radio link 15, 16. It will be appreciated that the scan means 17 continue to periodically scan the radio environment for radio link criteria, such to establish the need for another call handover.

In a preferred embodiment of the invention, initiating handover already involves the occupation of the second radio link 15, 16, however the actual handover is performed and coupled after the second or further subsequent periodic scan of the radio envirnment whilst the radio link criteria between the radio communication unit 10 and the second radio access unit 12 still exceed in performance the radio link criteria obtained between the remote communication unit 10 and the first radio access unit 11.

Scanned radio link criteria are refreshed every 1600 ms in a slow single carrier scan and, for example, every 800 ms in a fast single carrier scan. However, longer scan times can be envisaged without effecting the performance of the system.

As will be appreciated, the handover method according to the invention does not involve verification measurements above the scanning of the radio environment itself, thereby preventing the consumption of scarce battery power.

As shown in Fig. 4c, in the new situation the first radio access unit ceased its transmission at the first radio link 13, 14 whereas the radio communication unit 10 is now linked to the second radio access unit 12 and the second radio link 15, 16 which bears the call in progress.

Whenever the second radio link 15, 16 cannot be established it is preferred to resume the call at the first radio link 13, 14, if applicable. Otherwise a third radio link connecting to the first radio access unit has to be established.

When a call is resumed all the call control features, such as encryption and the like particular to the call, are started on the new radio link as well through the radio exchange 2 (Fig. 1)

In case of an inter-system handover the same procedure will be followed as outlined above in connection with inter-cell handover. However, switching between different radio communication systems may be subject to additional access rights and the like.

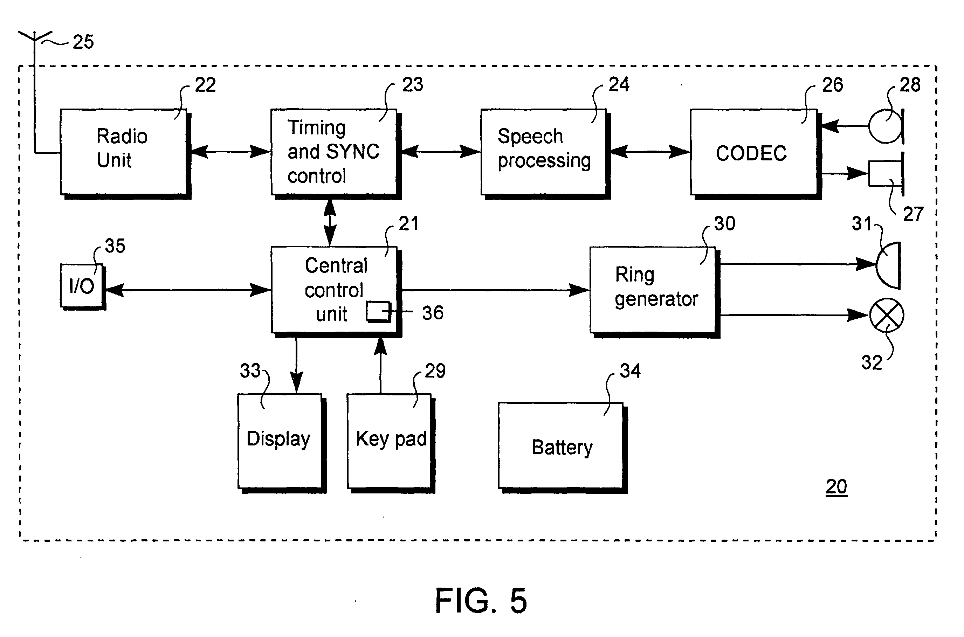

Fig. 5 shows a simplified block diagram of a radio telephone set comprising frequency or clock control circuitry according to the present invention. The radio telephone set 20 has four essential building blocks, i.e. a central control and application logic unit 21, a radio unit 22, a timing and synchronisation control unit 23 and a speech processing unit 24.

The radio unit 22 comprises an air interface 25 having an antenna system coupled to a transceiver unit comprising a transmitter/modulator and a receiver/demodulator (not shown).

The timing and synchronisation control unit 23 receives data over the air interface 25 and the radio unit 22 from a base station 3 (Fig. 1), which data are processed in accordance with the system clock timing provided by the radio exchange 2 (Fig. 1). Signalling and synchronisation information are removed from the received data by the unit 23 and received speech data are fed to the speech processing unit 24. The speech processing unit 24, among others, takes care of the deciphering of received data. A codec 26 decodes the received digitized speech data into analog form for making it audible to a user of the handset via a loudspeaker 27 connected to the codec 26.

Speech produced by the user is received by a microphone 28 and encoded into a suitable digital format by the codec 26. This encoded speech data is fed to the speech processing unit 24 which, among others, takes care of encryption of the speech data. The timing and synchronisation control unit 23 adds suitable synchronisation and signalling information to the encrypted speech data. The radio unit 22 transmits this signalling and speech data via the air interface 25 for reception by a base station 3 (Fig. 1) of the communication system to which the telephone set 20 is operatively connected.

The central control and application logic unit 21 comprises a microprocessor or microcontroller and memory means, and connects to the timing and synchronisation control unit 23. The central control unit 21 essentially controls the system data and the communication with the user of the radio telephone set 20 via a keypad means 29, display means 33 and ring generator means 30, all connected to the central control unit 21. Further, an external interface 35 connects to the central control unit 21 for external control and data processing purposes. Frame and time slot allocation and, in the case of a multicarrier multi-time-slot technology such as DECT, also the various combinations of carrier frequencies and time-slots are controlled by the central control unit 21 and stored in the memory means.

The ring generator means 30 connect to a buzzer 31 for producing a ringing or alerting sound at the arrival of a call. Optionally a visual alerting signal may be emitted by a lamp or Light Emitting Diode (LED) 32, connected as shown. The display means 33, such as an LCD device, are operatively connected to the central control unit 21 for displaying call information and other user and system data.

For the overall powering of the telephone set 20 a battery and powering unit 34 is included.

In accordance with the present invention, the timing and synchronisation control unit 23 is controlled 36 such to perform handover in accordance with the invention disclosed above with reference to Figs. 4a,b,c.

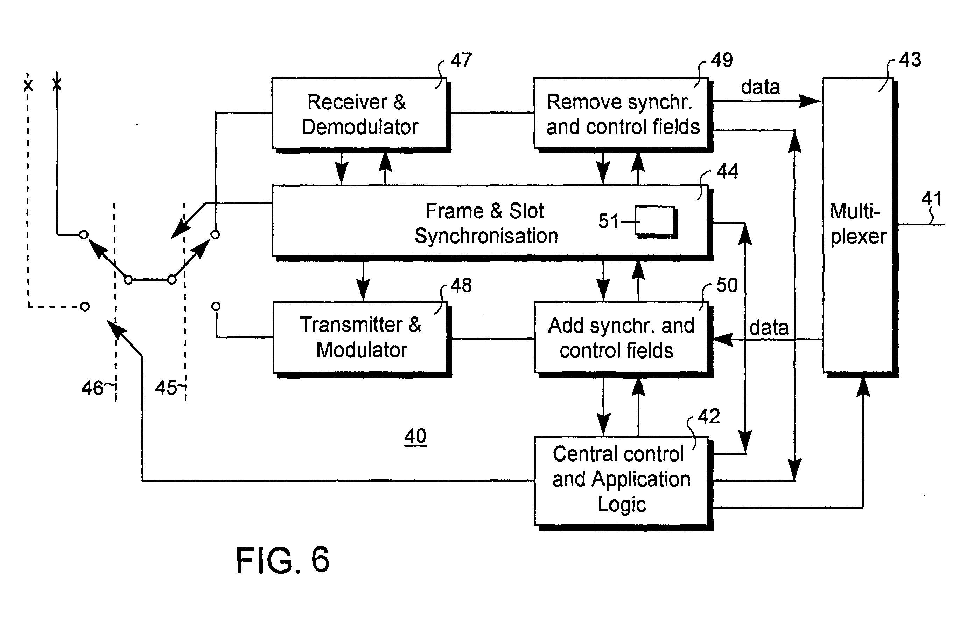

Fig. 6 shows a block diagram of a radio access unit 40, which operates in accordance with the DECT standard. The access unit 40 has a wired connection 41 to a radio exchange 2 shown in Fig. 1. Central control and application logic 42 detects incoming calls and controls outgoing calls and select suitable combinations of carrier and time slots in accordance with the DCA/CDCS algorithm. The different connections and time slots are merged via a multiplexer 43. The radio access unit 40 has a frame and slot synchronization unit 44 which controls slot reception and transmission timing. The central control logic 42 also controls a Transmit/Receive (T/R) switch 45 and an antenna diversity switch 46, if antenna diversity is implemented.

With antenna diversity, if a radio connection provides no good communication, the control logic first tries the other antenna before changing the radio communication channel.

The radio interface of the access unit 40 consists of a receiver/demodulator 47 and a transmitter/modulator 48. Synchronisation and control information is stripped from received data by unit 49, whereas such information is added to the data to be transmitted by unit 50, connected as shown.

The frame and slot synchronization unit 44 is controlled 51 such to support handover in accordance with the present invention. For speeding up the measurement of radio link transmission criteria as disclosed above, the radio access unit is arranged to transmit information, also in its idle state, on at least two different radio links. In the idle state, such transmission is known as "dummy bearer".

Although the present invention is generally illustrated with respect to a DECT radio telephone communication system, it is not restricted thereto. The present invention can be used with other communication devices, such as data communication equipment, as well as in other wireless multicell communication systems.

## Claims

1. A method of performing handover of a call in a duplex radio communication system comprising radio access units (11, 12) and at least one remote radio communication unit (10), said radio access units and the or each remote radio communication unit being arranged for establishing a call at a radio link between a remote radio communication unit and a radio access unit, which radio link is selected from a plurality of predetermined radio links, and for switching a call in progress at a first radio link between a remote radio communication unit (10) and a first radio access unit (11) to a second radio link between said remote radio communication unit and a second radio access unit (12) subject to periodically measured radio link criteria between said remote radio communication unit (10) and said second radio access unit (12) exceeding in performance periodically measured radio link criteria between said remote radio communication unit (10) and said first radio access unit (11) wherein handover of said call in progress is initiated if said measured radio link criteria between said radio communication unit (10) and said second radio access unit (12) exceed in performance said measured radio link criteria between said remote radio communication unit (10) and said first radio access unit (11), **characterized in that** said handover having been initiated is established if said measured radio link criteria between said radio communication unit (10) and said second radio access unit (12) exceed in performance said measured radio link criteria between said remote radio communication unit (10) and said first radio access unit (11) for at least two consecutive periodic radio link criteria measurements.

2. A method according to claim 1, wherein said handover is established if said measured radio link criteria differ over a predetermined range or threshold.

3. A method according to claim 1 or 2, wherein said handover is established based on measured radio link criteria of said first and said second radio link as obtained for at least one of Received Signal Strenght indicator (RSSI) measurement and Bit Error Rate (BER) measurement

4. A method according to claim 1, 2 or 3, wherein said radio link criteria are measured by the or each remote radio communication unit

5. A method according to claim 1, 2, 3 or 4, wherein said handover is initiated and performed under the control of a remote radio communication unit.

6. A method according to claim 5, wherein said radio link criteria are obtained by periodically measuring radio link criteria of selected or all radio communication channels available to a remote radio communication unit thereby maintaining a list of radio links available for handover.

7. A method according to any of the previous claims, wherein initiating said handover involves occupation of said second radio link.

8. A method according to any of the previous claims, wherein said radio communication system operates in accordance with the Digital Enhanced Cordless Telecommunications standard, and wherein said predetermined radio link criteria are formed by either one or a combination of the following criteria: RF signal level, burst synchronisation error, system information field test word error, data field test word error.

9. A radio communication unit (10), such as a radio telephone for use in a duplex radio communication system, comprising radio access units and at least one remote radio communication unit, in particular a cordless radio communication system, wherein said radio communication unit comprises control means adapted to operate following the method according to any of the previous claims.

10. A radio acces unit (11, 12), such as a radio base station for use in a duplex radio communication system, comprising radio access units and at least one remote radio communication unit, in particular a cordless radio communication system, wherein said radio access units comprise control means adapted to operate following the method according to any of the claims 1-8.

## Patentansprüche

1. Verfahren zum Durchführen eines Handovers eines Anrufes in einem Duplex-Funk-Kommunikationssystem mit Funkzugangseinheiten (11, 12) und zumindest einer entfernten Funkkommunikationseinheit (10), wobei die Funkzugangseinheiten und die oder jede entfernte Funkkommunikationseinheit zum Einrichten eines Anrufes auf einer Funkverbindung zwischen einer entfernten Funkkommunikationseinheit und einer Funkzugangseinheit ausgelegt sind, dessen Funkverbindung aus einer Vielzahl von vorbestimmten Funkverbindungen ausgewählt ist, und zum Schalten eines auf einer ersten Funkverbindung zwischen einer entfernten Funkkommunikationseinheit (10) und einer ersten Funkzugangseinheit (11) laufenden Anrufes auf eine zweite Verbindung zwischen der entfernten Funkkommunikationsverbindung und einer zweiten Funkzugangsverbindung (12), die periodisch gemessenen Funkverbindungskriterien zwischen der entfernten Funkkommunikationsverbindung (10) und der zweiten Funkzugangseinheit (12) unterliegen, die in der Performance periodisch gemessene Funkverbindungskriterien zwischen der entfernten Funkverbindungseinheit (10) und der ersten Funkverbindungseinheit (11) übersteigen; wobei das Handover des laufenden Anrufes initiiert wird, wenn die gemessenen Funkverbindungskriterien zwischen der Funkverbindungseinheit (10) und der zweiten Funkzugangseinheit (12) in der Performance die gemessenen Funkverbindungskriterien zwischen der entfernten Funkkommunikationseinheit (10) und der ersten Funkzugangseinheit (11) übersteigen; **dadurch gekennzeichnet, dass** das initiierte Handover eingerichtet wird, wenn die gemessenen Funkverbindungskriterien zwischen der Funkverbindungseinheit (10) und der zweiten Funkzugangseinheit (12) in der Performance die gemessenen Funkverbindungskriterien zwischen der entfernten Funkverbindungseinheit (10) und der ersten Funkzugangseinheit (11) für zumindest zwei aufeinanderfolgende periodische Funkverbindungskriterien-Messungen überschreitet.

2. Verfahren nach Anspruch 1, wobei das Handover eingerichtet wird, wenn die gemessenen Funkverbindungskriterien sich über einen vorbestimmten Bereich oder Schwellenwert unterscheiden.

3. Verfahren nach Anspruch 1 oder 2, wobei das Handover auf Grundlage der gemessenen Funkverbindungskriterien der ersten und zweiten Funkverbindung eingerichtet wird, wie es für zumindest eine aus einer Received-Signal-Strength-Indicator- (RSSI) Messung und einer Bit-Error-Rate- (BER) Messung erhalten wird.

4. Verfahren nach Anspruch 1, 2 oder 3, wobei die Funkverbindungskriterien durch die oder jede entfernte Funkkommunikationseinheit gemessen werden.

5. Verfahren nach Anspruch 1, 2, 3 oder 4, wobei das Handover unter der Steuerung einer entfernten Funkkommunikationseinheit initiiert und durchgeführt wird.

6. Verfahren nach Anspruch 5, wobei die Funkverbindungskriterien erhalten werden durch ein periodisches Messen der Funkverbindungskriterien von ausgewählten oder allen Funkkommunikationskanälen, die einer entfernten Funkverbindungseinheit verfügbar sind, wodurch **dadurch** eine Liste von Funkverbindungen unterhalten wird, die für das Handover verfügbar sind.

7. Verfahren nach irgendeinem der vorhergehenden Ansprüche, wobei das Initiieren des Handovers eine Belegung der zweiten Funkverbindung beinhaltet.

8. Verfahren nach irgendeinem der vorhergehenden Ansprüche, wobei das Funkkommunikationssystem in Übereinstimmung mit dem Digital- Enhanced - Cordless - Telecommunications-Standard arbeitet, und wobei die vorbestimmten Funkverbindungskriterien durch irgendeines oder eine Kombination der folgenden Kriterien ausgebildet werden: RF-Signalpegel, Burst-Synchronisationsfehler, System-Informationsfeld-Testwortfehler, Datenfeld - Testwortfehler.

9. Funkkommunikationseinheit (10), wie zum Beispiel ein Funktelefon, zur Verwendung in einem Duplex-Funkkommunikationssystem, umfassend Funkzugangseinheiten und zumindest eine entfernte Funkkommunikationseinheit, insbesondere ein drahtloses Kommunikationssystem, wobei die Funkkommunikationseinheit eine Steuereinheit umfasst, die ausgelegt ist, um dem Verfahren nach irgendeinem der vorherigen Ansprüche zu folgen.

10. Funkzugangseinheit (11, 12), wie zum Beispiel eine Funkbasisstation, zur Verwendung in einem Duplex-Funkkommunikationssystem, umfassend Funkzugangseinheiten und zumindest eine entfernte Funkkommunikationseinheit, insbesondere ein drahtloses Kommunikationssystem, wobei die Funkkommunikationseinheiten eine Steuereinheit umfasst, die ausgelegt ist, um dem Verfahren nach irgendeinem der Ansprüche 1 - 8 zu folgen.

## Revendications

1. Procédé d'exécution d'un transfert d'un appel dans un système de communications radio duplex comportant des unités d'accès radio (11, 12) et au moins une unité de communication radio éloignée (10), lesdites unités d'accès radio et la ou chaque unité de communication éloignée étant agencées pour établir un appel au niveau d'une liaison radio entre une unité de communication radio éloignée et une unité d'accès radio, laquelle liaison radio est choisie parmi de multiples liaisons radio prédéterminées, et pour commuter un appel en cours au niveau d'une première liaison radio entre une unité de communication radio éloignée (10) et une première unité d'accès radio (11) à une seconde liaison radio entre ladite unité de communication radio éloignée et une seconde unité d'accès radio (12) soumise à des critères de liaison radio mesurés périodiquement entre ladite unité de communication radio éloignée (10) et ladite seconde unité d'accès radio (12) dépassant en performance les critères de liaison radio mesurés périodiquement entre ladite unité de communication radio éloignée (10) et ladite première unité d'accès radio (11), dans lequel un transfert dudit appel en cours est amorcé si lesdits critères de liaison radio mesurés entre ladite unité de communication radio (10) et ladite seconde unité d'accès radio (12) dépassent en performance lesdits critères de liaison radio mesurés entre ladite unité de communication radio éloignée (10) et ladite première unité d'accès radio (11), **caractérisé en ce que** ledit transfert ayant été amorcé est établi si lesdits critères de liaison radio mesurés entre ladite unité de communication radio (10) et ladite seconde unité d'accès radio (12) dépassent en performance lesdits critères de liaison radio mesurés entre ladite unité de communication radio éloignée (10) et ladite première unité d'accès radio (11) pendant au moins deux mesures périodiques consécutives des critères de liaison radio.

2. Procédé selon la revendication 1, dans lequel ledit transfert est établi si lesdits critères mesurés de liaison radio diffèrent sur une plage ou un seuil prédéterminé.

3. Procédé selon la revendication 1 ou 2, dans lequel ledit transfert est établi sur la base de critères mesurés de liaisons radio desdites première et seconde liaisons radio, tels qu'obtenus pour au moins une mesure d'indicateur de niveau de signal reçu (RSSI pour "Received Signal Strenght Indicator") et un mesure du taux d'erreur sur les bits (BER pour "Bit Error Rate").

4. Procédé selon la revendication 1, 2 ou 3, dans lequel lesdits critères de liaison radio sont mesurés par la ou chaque unité de communication radio éloignée.

5. Procédé selon la revendication 1, 2, 3 ou 4, dans lequel ledit transfert est amorcé et exécuté sous la commande d'une unité de communication radio éloignée.

6. Procédé selon la revendication 5, dans lequel lesdits critères de liaison radio sont obtenus par une mesure périodique de critères de liaison radio de canaux de communication radio sélectionnés ou de la totalité de ces canaux disponibles pour une unité de communication radio éloignée de façon à maintenir une liste de liaisons radio disponible pour un transfert.

7. Procédé selon l'une quelconque des revendications précédentes, dans lequel l'amorce dudit transfert comprend l'occupation de ladite seconde liaison radio.

8. Procédé selon l'une quelconque des revendications précédentes, dans lequel ledit système de communication radio fonctionne conformément à la norme de télécommunications sans fil numériques renforcées, et dans lequel lesdits critères prédéterminés de liaison de radio sont formés par l'un ou une combinaison des critères suivants : le niveau de signal RF, l'erreur de synchronisation de salves, l'erreur de mot de test de champ d'information du système, l'erreur de mot de test de champ de données.

9. Unité de communication radio (10), telle qu'un radiotéléphone pour une utilisation dans un système de communications radio duplex, comportant des unités d'accès radio et au moins une unité de communication radio éloignée, en particulier un système de communications radio sans fil, dans laquelle ladite unité de communication radio comporte des moyens de commande conçus pour fonctionner conformément au procédé selon l'une quelconque des revendications précédentes.

10. Unité d'accès radio (11, 12), telle qu'une station de base radio pour une utilisation dans un système de communications radio duplex, comportant des unités d'accès radio et au moins une unité de communication radio éloignée, en particulier un système de communications radio sans fil, dans laquelle lesdites unités d'accès radio comprennent des moyens de commande conçus pour fonctionner en suivant le procédé selon l'une quelconque des revendications 1 à 8.
